# EUROPEAN PATENT APPLICATION

(11) **EP 2 693 754 A1**
(43) Date of publication of application: **05.02.2014**
(21) Application number: 13179046.1
(22) Date of filing: 02.08.2013
(51) Int. Cl.: H04N 7/36, H04N 7/26, H04N 7/46

(54) **Transcoding video data**

(30) Priority: 02.08.2012 US 201213564906
(71) Applicant: Intel Corporation, Santa Clara, CA 95054 (US)
(72) Inventor: Lee, Penny Y., Bellevue, WA Washington 98005 (US); Liu, Ping, Sunnyvale, CA California 94089 (US); Wang, Changliang Charlie, Bellevue, WA Washington 98008 (US)
(74) Representative: Goddar, Heinz J.

(57) **Abstract**

A method and computing device for transcoding video data are provided herein. In examples, the method includes decoding a video stream to obtain decoded frames. Further, a decode parameter may be extracted from the video stream, and the frames may be encoded using the decode parameter. The decode parameter may be a decode streamout.

## Description

### Technical Field

The present invention relates generally to transcoding video data. More specifically, the present invention relates to transcoding that can be done by modifying a decode parameter.

### Background Art

Video compression techniques enable video streams to be encoded in order to reduce the image redundancy contained in the video streams. Transcoding is a process by which an encoded video stream is converted to another format. Video compression formats include, but are not limited to, H.264, MPEG-4, and VC-1. Transcoding is typically used in scenarios where a computing device does not support the current format of the video stream, or when the size of the video stream exceeds the storage capacity of the computing device. For example, a video stream may be transcoded between video compression formats, or the characteristics of the stream may be changed. Characteristics of the video stream include the resolution and the bit rate of the video stream. Transcoding may also be used when recording streaming video and when using wireless display (WiDi) techniques. In any event, transcoding typically includes first decoding the incoming video stream, and then encoding the video stream in the desired format with the desired characteristics.

### Brief Description of the Drawings

Fig. 1 is a block diagram of a computing device that may be used for transcoding video data, in accordance with embodiments;
Fig. 2 is a block diagram showing a process flow for transcoding video data, in accordance with embodiments;
Fig. 3 is a block diagram showing a data flow for transcoding video data, in accordance with embodiments;
Fig. 4 is a block diagram showing tangible, non-transitory, computer-readable media that stores code for transcoding video data, in accordance with embodiments;
Fig. 5 is a block diagram of an exemplary system for implementing shared physical memory; and
Fig. 6 is a schematic of a small form factor device in which the system of Fig. 5 may be embodied.

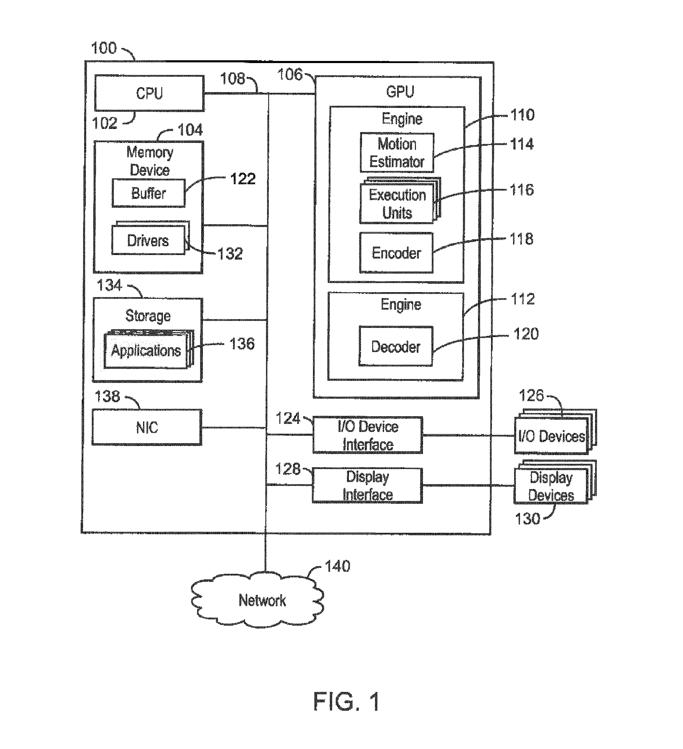

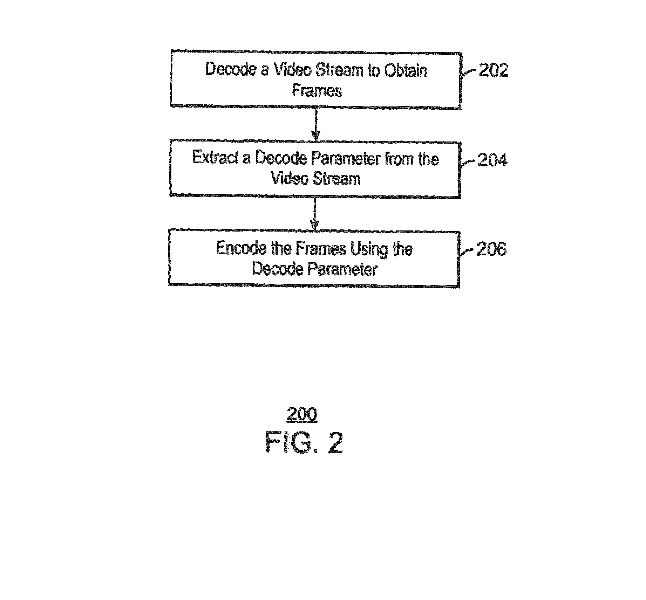

The same numbers are used throughout the disclosure and the figures to reference like components and features. Numbers in the 100 series refer to features originally found in Fig. 1; numbers in the 200 series refer to features originally found in Fig. 2; and so on.

### Description of the Embodiments

As discussed above, transcoding is a process by which an encoded video stream is converted to another compression format or the characteristics of the current format are changed. Traditionally, transcoding involves a lengthy processing pipeline. As used herein, a pipeline refers to a set of linked computing processes. Data is sent as input to the first process in the pipeline, the output of each process is sent to the next process as input until data has exited the linked set of processes. The various processes of a traditional transcoding pipeline use a large portion of processing time and power when compared to the capabilities of low power devices.

For example, when a VC-1 video stream is downloaded to a computing device that cannot play VC-1 video streams, the video stream may be transcoded to the correct format for the computing device. Traditional techniques of transcoding begin by decoding the video stream into a set of frames. As used herein, a frame is a still or nearly still picture of the video stream. When the video is played, each frame is rendered on a display for a short period of time.

A hierarchical motion estimation (HME) search may be performed on each frame in order to determine the motion vectors for each frame. Motion estimation is a technique in which the movement of objects in a sequence of frames is analyzed to obtain vectors that represent the estimated motion of the object between frames. In embodiments, the frame is divided into macroblocks, and the motion vectors represent the change in position of a macroblock between frames. A macroblock is typically a block of pixels. For example, a macroblock could be sixteen by eight pixels in size.

A HME search involves performing coarse searches for motion vectors for each frame to determine an estimated motion vector for each macroblock within the frame. The initial estimated motion vectors may be refined by performing additional searches at a finer level granularity. For example, the macroblocks may be searched at various resolutions, from coarse to fine levels of granularity, in order to determine the motion vectors. Other HME searching techniques may include, but are not limited to, changing the size of the macroblocks when searching for motion vectors.

Once the motion vectors and macroblock types have been determined through an HME search, bit rate control may be applied to each frame in order to create frames that meet the frame size of the encoding format of the target video stream. The various video compression formats use a stated bit rate for a video stream, and the bit rate is the number of bits per second that are present when the video is played. Bit rate control is done by determining the ideal quantization parameters for the frame to result in the target frame size. A quantization parameter is a value that is used to divide the coefficients of the current frame in order to obtain values for the target frame size. A higher quantization parameter may result in more zero coefficients that do not have to be encoded to reduce the bitrate at the expense of quality. Accordingly, the frames may be sized in such a manner that the number of bits per frame comports with the bit rate of the encoding format of the target video stream.

An encoder may perform motion estimation again to determine the finer motion vectors and macroblock types of the frames after the bit rate control has been applied to each frame. Once new motion vectors, quantization parameters, and macroblock types have been determined, the frames may be encoded in to a final compressed video stream in the target video compression format.

Each component of traditional transcoding pipeline is performed separately from the other components. Specifically, the decoding, HME search, bit rate control, and encoding processes of the traditional transcoding pipeline are performed using separate and distinct kernel level processes. The multiple processes of the transcoding pipeline may overwhelm the resources and available power of a low power architecture, such as those found in tablet devices, laptops, and cellular phones. Accordingly, embodiments described herein relate to transcoding video data. In embodiments, the motion vectors, quantization parameters, and macroblock types of the decoded frames may be reused during encoding.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

Some embodiments may be implemented in one or a combination of hardware, firmware, and software. Some embodiments may also be implemented as instructions stored on a machine-readable medium, which may be read and executed by a computing platform to perform the operations described herein. A machine-readable medium may include any mechanism for storing or transmitting information in a form readable by a machine, e.g., a computer. For example, a machine-readable medium may include read only memory (ROM); random access memory (RAM); magnetic disk storage media; optical storage media; flash memory devices; or electrical, optical, acoustical or other form of propagated signals, e.g., carrier waves, infrared signals, digital signals, or the interfaces that transmit and/or receive signals, among others.

An embodiment is an implementation or example. Reference in the specification to "an embodiment," "one embodiment," "some embodiments," "various embodiments," or "other embodiments" means that a particular feature, structure, or characteristic described in connection with the embodiments is included in at least some embodiments, but not necessarily all embodiments, of the inventions. The various appearances of "an embodiment," "one embodiment," or "some embodiments" are not necessarily all referring to the same embodiments.

Not all components, features, structures, characteristics, etc. described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

It is to be noted that, although some embodiments have been described in reference to particular implementations, other implementations are possible according to some embodiments. Additionally, the arrangement and/or order of circuit elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

Fig. 1 is a block diagram of a computing device 100 that may be used for transcoding video data, in accordance with embodiments. The computing device 100 may be, for example, a laptop computer, desktop computer, tablet computer, mobile device, server, or cellular phone, among others. The computing device 100 may include a central processing unit (CPU) 102 that is configured to execute stored instructions, as well as a memory device 104 that stores instructions that are executable by the CPU 102. The CPU 102 can be a single core processor, a multi-core processor, a computing cluster, or any number of other configurations. Furthermore, the computing device 100 may include more than one CPU 102. The instructions that are executed by the CPU 102 may be used to transcode video data. The memory device 104 can include random access memory (RAM), read only memory (ROM), flash memory, or any other suitable memory systems. For example, the memory device 104 may include dynamic random access memory (DRAM).

The computing device 100 may also include a graphics processing unit (GPU) 106. As shown, the CPU 102 may be connected through a bus 108 to the GPU 106. The GPU 106 may be configured to perform any number of graphics operations within the computing device 100. For example, the GPU 106 may be configured to render or manipulate graphics images, graphics frames, videos, or the like, to be displayed to a user of the computing device 100. The GPU 106 may also include one or more engines, such as an engine 110 and an engine 112. An engine is a component of the GPU that may be used for parallel processing of data sent to the GPU. Although two GPU engines are shown, the GPU may contain any number of engines.

The engine 110 may include a motion estimator 114, one or more execution units 116, and an encoder 118. The motion estimator 114, execution units 116, and encoder 118 may be implemented in either hardware, software, or any combination thereof. In embodiments, the motion estimator 114 may perform motion estimation searches, as discussed above. The execution units 116 are multipurpose GPU cores that can run microcode to aid in motion estimation decisions. The engine 112 may include a decoder 120. In embodiments, the decoder 120 decodes an incoming video stream and sends a decode parameter to a buffer 122 within memory device 104. In embodiments, the decode parameter may be a decode streamout. The information represented by decode streamout includes motion vectors, quantization parameters, and macroblock types for each decoded frame of the video stream. The motion estimator 114 may obtain the decode parameter from the buffer 122, modify the decode parameter to comply with the target video stream format and characteristics, and then send the modified decode parameter to the encoder 118. In this manner, decode parameter between the decoder 120 and the encoder 118 processes of the transcoding pipeline are shared. In embodiments, sharing the decode parameter or decode streamout greatly reduces the amount of time spent transcoding when compared to the traditional transcoding pipeline. In embodiments, when it is not possible to directly use the decode parameter for encoding, the decode parameter or the decode streamout may be used as a starting point for beginning a motion estimation search. Motion estimation can be performed faster on the decoded frames and without any coarse grain first HME pass since the decode parameter provides a good starting point for the search. The resulting motion vectors are then used for encoding.

The CPU 102 may be connected through the bus 108 to other input/output (I/O) components using an I/O device interface 124 configured to connect the computing device 100 to one or more I/O devices 126. The I/O devices 126 may include, for example, a keyboard and a pointing device, wherein the pointing device may include a touchpad or a touchscreen, among others. The CPU 102 may also be linked through the bus 108 to a display interface 128 configured to connect the computing device 100 to one or more display devices 130. The display devices 130 may include a display screen that is a built-in component of the computing device 100. The display devices 130 may also include a computer monitor, television, or projector, among others, that is externally connected to the computing device 100.

The memory device 104 may include one or more drivers 132. The drivers 132 enable a piece of hardware or an application to communicate with the operating system, applications, or other hardware of the computing device 100. For example, a driver 132 may enable transcoding video data.

The computing device 100 may also include a storage 134. The storage 134 is a physical memory such as a hard drive, an optical driver, a thumbdrive, an array of drives, or any combinations thereof. The storage 134 may also include remote storage drives. The storage may also include one or more applications 136. The more applications 136 include, but are not limited to, video playback applications, video chat applications, video conferencing applications, and presentation applications. In embodiments, the applications 136 may be used to play video that has been transcoded, according to embodiments.

A network interface controller (NIC) 138 may be configured to connect the computing device 100 through the bus 108 to a network 140. The network 140 can be a wire line network, a wireless network, or a cellular network. The network 140 may also be any wide area network (WAN), any local area network (LAN), or the Internet, among others. For example, the network 140 can be 3GPP LTE network or a WiFi network. In embodiments, the network 140 may be used to download videos for transcoding in accordance with embodiments.

The block diagram of Fig. 1 is not intended to indicate that the computing device 100 is to include all of the components shown in Fig. 1. Further, the computing device 100 may include any number of additional components not shown in Fig. 1, depending on the details of the specific implementation.

Fig. 2 is a block diagram showing a process flow 200 for transcoding video data, in accordance with embodiments. At block 202, a video stream is decoded to obtain frames. As discussed above, a frame is a still or nearly still picture of the video stream. Each frame is rendered on a display for a short period of time. In embodiments, the decoded frames are written to a surface. As used herein, a surface is a buffer in memory that is used to store the frames for processing.

The video stream to be decoded may have been compressed by using various encoding techniques. Algorithms for compressing frames differ by the amount of data provided to specify the image contained within the frame. For example, the frames may be specified during compression using intra-coded frames (I-frames), predicted picture frames (P-frames) and bidirectional predicted picture frames (B-frames). As used herein, specified refers to the data that is saved for each frame during compression. The data may be saved in a buffer, memory device, or storage.

An I-frame is fully specified. For example, when the video is a ball bouncing across a stationary background, both the position of the ball and the entire background are saved for each frame. Accordingly, each frame specified using I-frames during compression contains all information used to render the frame, without using the data specified for any other frame. A P-frame is specified by saving the changes that occur in each frame when compared to the previous frame. Thus, when the video is a ball that bounces across a static background, the movement of the ball is encoded, without encoding the static background. The bit rate of the compressed file is thereby reduced when compared to the compression using I-frames, which specifies the entire image. A B-frame is specified by saving the changes that occur in each frame when compared to both the previous frame and the following frame. Accordingly, when the video is a ball that bounces across a static background, the changed location of the ball when compared to the previous location of the ball and the following location of the ball is saved, without encoding the static background. Typically, the use of B-frames results in a lower bit rate when compared to I-frames and P-frames.

The frames of a video stream may be referred to as a group of pictures (GOP). Each GOP can contain various combinations of I-frames, P-frames and B-frames. .Further, a video compression format may specify a frame sequence in order to comply with that format. Accordingly, a when a video stream is decoded, the resulting frames may include I-frames, P-frames, and B-frames in various combinations.

At block 204, a decode parameter from is extracted the video stream. In embodiments, the decode parameter is a decode streamout of the video stream. The decode streamout may include the motion vectors of the video stream, quantization parameters, and macroblock types as discussed above. In embodiments, the decode streamout varies depending on the format of the video stream that was decoded. Furthermore, in embodiments, the decode parameter includes motion vectors of the video stream, quantization parameters, and macroblock types as discussed above.

At block 206, the frames are encoded using the decode parameter. Since the motion vectors of the decoded format are correlated to the motion vectors of the encoded format, a hierarchical motion estimation search is not performed. In embodiments, the motion vectors, quantization parameters, and macroblock types obtained from the decode parameter is modified in order to be complaint with the encoded video format. Further, the quantization parameters and macroblock types may be modified in order to encode the frames to the target video compression format. In embodiments, the encoding may be performed faster than real time. Faster than real time encoding refers to encoding the frames faster than the frames are rendered. For example, a video playback typically renders 30 frames per second. Accordingly, faster than real time encoding will encode the frames at a rate that is more than 30 frames per second.

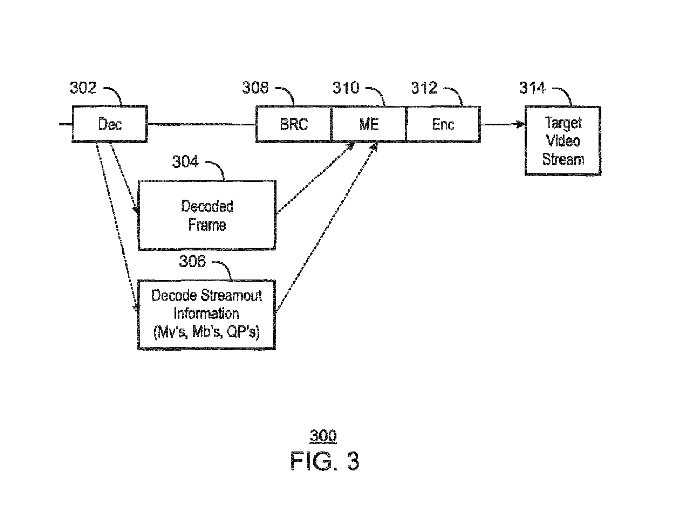

Fig. 3 is a schematic of a transcoding pipeline, according to embodiments. At block 302, an incoming video stream is decoded (DEC). Information extracted from the video stream includes decoded frames 304 and decode streamout 306. As discussed above, the decode parameter may be a decode streamout that includes characteristics of the video, including motion vectors (MV's), macroblocks (MB's), and quantization parameters (QP's). At block 308, bit rate control (BRC) may be performed. At block 310, motion estimation (ME) may be performed on the decoded frames, if necessary, using the decode streamout 306. In embodiments, the motion estimation uses the motion vectors as a starting point of a motion estimation search.

At block 312, the frames are encoded (ENC) in the desired video format with the desired characteristics. The encoding may include motion compensation, inverse transform, quantization, and bit stream packing. At block 314, the resulting target video stream in the target video compression format is obtained from the transcoding pipeline.

In embodiments, a video stream is transcoded from an advanced video coding (AVC) compression format to another AVC compression format with a higher bit rate. Such a transcode may occur in WiDi applications. WiDi is a technique by which a desktop of an electronic device is rendered on a remote display, wirelessly. For example, a tablet device may send all images on its display to a remote adapter in order to be rendered on a remote device, such as a television. Uses for WiDi include online video playback over a web browser, video conferencing, and video chat. While a tablet may play a video stream encoded using an AVC compression format and a lower bit rate, a television may use the same AVC standard with a higher bit rate in order to display the video on a television. Accordingly, the transcode includes performing bit rate control on each frame. In such a scenario, the motion vectors may not be modified. In embodiments, the frames may be repackaged into the same video compression format with the desired change in bit rate.

In embodiments, the transcode includes changing the resolution of the first video stream to another resolution for the second video stream. The resolution change is typically from a high resolution to a lower resolution. In this case, the motion estimator would modify the decode parameter of the first video stream by a scaling factor in order to scale the motion vectors proportionally to the scaling factor between the two resolutions. The scaled decode parameter can be used for encoding the frames to the target resolution. In embodiments, the decode parameter is used as a predictor for where and how to start searching for motion vectors in the scaled frames. In examples, the encoded stream may have different characteristics than your decoded stream that provides the decode parameter. The decode parameter may not be able to be reused for the target encoding format. For example, if the format changes or the resolution changes, the decode parameter or the decode streamout may not be directly used when encoding because some macroblock types may not be supported in the encoded format, or the motion vectors may need to be scaled due to the resolution change.

Additionally, in embodiments, transcoding video data includes performing a picture type change between the initial video compression format and the target video compression format. The target video compression format may include a target group of pictures (GOP) structure with a pattern that differs from the pattern of the GOP structure of the first video stream. In such an embodiment, the decode parameter may be used as a hint for encoding. For example, if the frame is encoded using I-frames, and the target video compression format specifies that the frame should be converted to P-frame or B-frames, the motion estimation is done without reusing any of the previous data, as there is no motion estimation done for I-frame encoding. The lack of motion estimation for I-frame encoding results in the I-frame encoded macroblocks having no motion vectors to reuse. Similarly, if the decoded frame is encoded using P-frames or B-frames, and the target frame is an I-frame, the motion estimation may not need to be performed. If the frame is converted from a B-frame to a P-frame, a reference frame could be used as a hint for the beginning of a motion search.

In embodiments, transcoding video data involves changing a level or profile of the video compression format. The profile of the video compression format refers to sets of capabilities within the video compression format that targets specific classes of applications. For example, the H.264 video compression format has different profiles that support each of the videoconferencing applications, mobile applications, and online streaming applications. Similarly, a level of the video compression format specifies a set of constraints on decoder within each profile. If the target video stream requests a change of profile or level, the motion estimation module may modify the decode parameter to comply with the profile and level limits.

Furthermore, in embodiments, transcoding video data may involve a bit rate change. If the change in bit rate between the initial video stream and targeted video encoded stream is large, then it may not be practical to directly use the decode parameter to encode the decoded frames. In such embodiments, a limit may be imposed on the bit rate delta. For example, when transcoding includes going from a high bit rate stream to low bit rate stream, it may be desirable to not use the same macroblock types. In such an example, a limit on the bit rate delta may be used to signal when the macroblocks should be determined without reusing any of the previous data.

Additionally, in embodiments, transcoding may involve changing from one video format to another video format. For example, the when a video stream is converted from a VC-1 video compression format to an AVC video compression format, the motion estimator can modify the decode streamout by knowing the target video compression format. The motion vectors of the decode parameter may be converted to motion vectors that are compliant with the target video compression format.

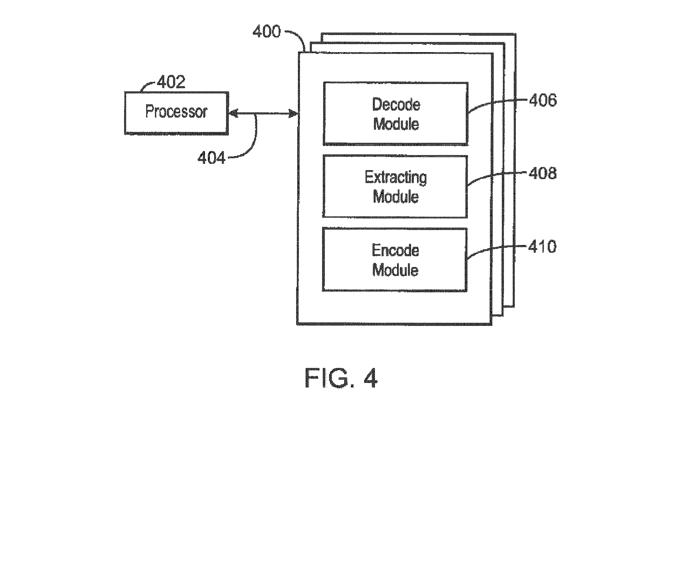

Fig. 4 is a block diagram showing tangible, non-transitory computer-readable media 400 that stores code for transcoding video data, in accordance with embodiments. The tangible, non-transitory computer-readable media 400 may be accessed by a processor 402 over a computer bus 404. Furthermore, the tangible, non-transitory computer-readable media 400 may include code configured to direct the processor 402 to perform the methods described herein.

The various software components discussed herein may be stored on the tangible, non-transitory computer-readable media 400, as indicated in Fig. 4. For example, a decode module 406 may be configured to decode a video stream to obtain decoded frames. An extracting module 408 may be configured to extract a decode parameter from the video stream. As discussed above, a decode parameter may be a decode streamout. Further, an encode module 410 may be configured to encode the frames using the decode parameter.

The block diagram of Fig. 4 is not intended to indicate that the tangible, non-transitory computer-readable media 400 is to include all of the components shown in Fig. 4. Further, the tangible, non-transitory computer-readable media 400 may include any number of additional components not shown in Fig. 4, depending on the details of the specific implementation.

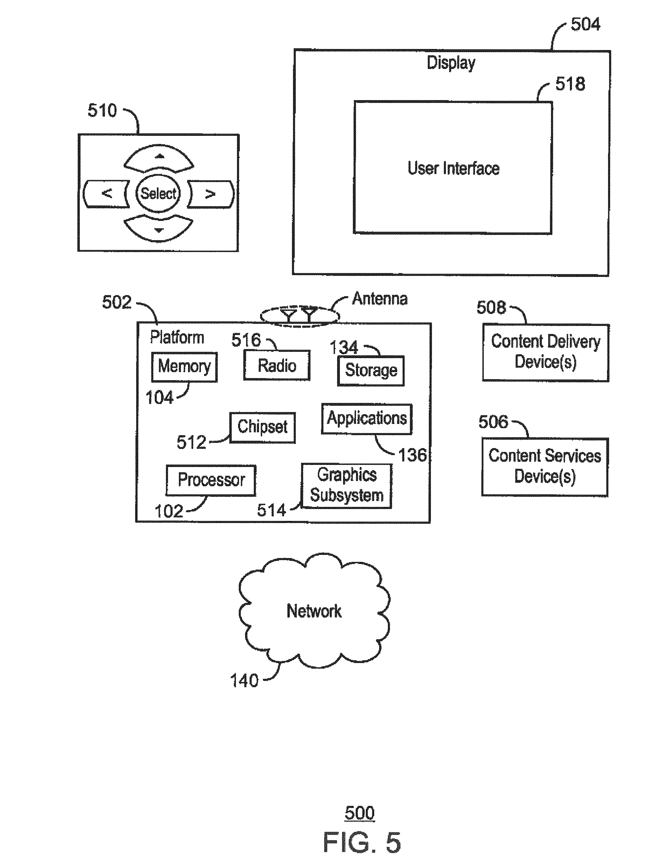

Fig. 5 is a block diagram of an exemplary system 500 for implementing shared physical memory. Like numbered items are as described with respect to Fig. 1. In some embodiments, the system 500 is a media system. In addition, the system 500 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, or the like.

In various embodiments, the system 500 comprises a platform 502 coupled to a display 504. The platform 502 may receive content from a content device, such as content services device(s) 506 or content delivery device(s) 508, or other similar content sources. A navigation controller 510 including one or more navigation features may be used to interact with, for example, the platform 502 and/or the display 504. Each of these components is described in more detail below.

The platform 502 may include any combination of a chipset 512, a central processing unit (CPU) 102, a memory device 104, a storage device 134, a graphics subsystem 514, applications 136, and a radio 516. The chipset 512 may provide intercommunication among the CPU 102, the memory device 104, the storage device 120, the graphics subsystem 514, the applications 136, and the radio 516. For example, the chipset 512 may include a storage adapter (not shown) capable of providing intercommunication with the storage device 134.

The CPU 102 maybe implemented as Complex Instruction Set Computer (CISC) or Reduced Instruction Set Computer (RISC) processors, x86 instruction set compatible processors, multi-core, or any other microprocessor or central processing unit (CPU). In some embodiments, the CPU 102 includes dual-core processor(s), dual-core mobile processor(s), or the like.

The memory device 104 may be implemented as a volatile memory device such as, but not limited to, a Random Access Memory (RAM), Dynamic Random Access Memory (DRAM), or Static RAM (SRAM). The storage device 134 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In some embodiments, the storage device 134 includes technology to increase the storage performance enhanced protection for valuable digital media when multiple hard drives are included, for example.

The graphics subsystem 514 may perform processing of images such as still or video for display. The graphics subsystem 514 may include a graphics processing unit (GPU), such as the GPU 106 (Fig. 1), or a visual processing unit (VPU), for example. An analog or digital interface may be used to communicatively couple the graphics subsystem 514 and the display 504. For example, the interface may be any of a High-Definition Multimedia Interface, DisplayPort, wireless HDMI, and/or wireless HD compliant techniques. The graphics subsystem 514 may be integrated into the CPU 102 or the chipset 512. Alternatively, the graphics subsystem 514 may be a stand-alone card communicatively coupled to the chipset 512.

The graphics and/or video processing techniques described herein may be implemented in various hardware architectures. For example, graphics and/or video functionality may be integrated within the chipset 512. Alternatively, a discrete graphics and/or video processor may be used. As still another embodiment, the graphics and/or video functions may be implemented by a general purpose processor, including a multi-core processor. In a further embodiment, the functions may be implemented in a consumer electronics device.

The radio 516 may include one or more radios capable of transmitting and receiving signals using various suitable wireless communications techniques. Such techniques may involve communications across one or more wireless networks. Exemplary wireless networks include wireless local area networks (WLANs), wireless personal area networks (WPANs), wireless metropolitan area network (WMANs), cellular networks, satellite networks, or the like. In communicating across such networks, the radio 516 may operate in accordance with one or more applicable standards in any version.

The display 504 may include any television type monitor or display. For example, the display 504 may include a computer display screen, touch screen display, video monitor, television, or the like. The display 504 may be digital and/or analog. In some embodiments, the display 504 is a holographic display. Also, the display 504 may be a transparent surface that may receive a visual projection. Such projections may convey various forms of information, images, objects, or the like. For example, such projections may be a visual overlay for a mobile augmented reality (MAR) application. Under the control of one or more applications 136, the platform 502 may display a user interface 518 on the display 504.

The content services device(s) 506 may be hosted by any national, international, or independent service and, thus, may be accessible to the platform 502 via the Internet, for example. The content services device(s) 506 may be coupled to the platform 502 and/or to the display 504. The platform 502 and/or the content services device(s) 506 may be coupled to a network 140 to communicate (e.g., send and/or receive) media information to and from the network 140. The content delivery device(s) 508 also may be coupled to the platform 502 and/or to the display 504.

The content services device(s) 506 may include a cable television box, personal computer, network, telephone, or Internet-enabled device capable of delivering digital information. In addition, the content services device(s) 506 may include any other similar devices capable of unidirectionally or bidirectionally communicating content between content providers and the platform 502 or the display 504, via the network 140 or directly. It will be appreciated that the content may be communicated unidirectionally and/or bidirectionally to and from any one of the components in the system 500 and a content provider via the network 140. Examples of content may include any media information including, for example, video, music, medical and gaming information, and so forth.

The content services device(s) 506 may receive content such as cable television programming including media information, digital information, or other content. Examples of content providers may include any cable or satellite television or radio or Internet content providers, among others.

In some embodiments, the platform 502 receives control signals from the navigation controller 510, which includes one or more navigation features. The navigation features of the navigation controller 510 may be used to interact with the user interface 518, for example. The navigation controller 510 may be a pointing device that may be a computer hardware component (specifically human interface device) that allows a user to input spatial (e.g., continuous and multi-dimensional) data into a computer. Many systems such as graphical user interfaces (GUI), and televisions and monitors allow the user to control and provide data to the computer or television using physical gestures. Physical gestures include but are not limited to facial expressions, facial movements, movement of various limbs, body movements, body language or any combination thereof. Such physical gestures can be recognized and translated into commands or instructions.

Movements of the navigation features of the navigation controller 510 may be echoed on the display 504 by movements of a pointer, cursor, focus ring, or other visual indicators displayed on the display 504. For example, under the control of the applications 136, the navigation features located on the navigation controller 510 may be mapped to virtual navigation features displayed on the user interface 518. In some embodiments, the navigation controller 510 may not be a separate component but, rather, may be integrated into the platform 502 and/or the display 504.

The system 500 may include drivers (not shown) that include technology to enable users to instantly turn on and off the platform 502 with the touch of a button after initial boot-up, when enabled, for example. Program logic may allow the platform 502 to stream content to media adaptors or other content services device(s) 506 or content delivery device(s) 508 when the platform is turned "off." In addition, the chipset 512 may include hardware and/or software support for 5.1 surround sound audio and/or high definition 6.1 surround sound audio, for example. The drivers may include a graphics driver for integrated graphics platforms. In some embodiments, the graphics driver includes a peripheral component interconnect express (PCIe) graphics card.

In various embodiments, any one or more of the components shown in the system 500 may be integrated. For example, the platform 502 and the content services device(s) 506 may be integrated; the platform 502 and the content delivery device(s) 508 may be integrated; or the platform 502, the content services device(s) 506, and the content delivery device(s) 508 may be integrated. In some embodiments, the platform 502 and the display 504 are an integrated unit. The display 504 and the content service device(s) 506 may be integrated, or the display 504 and the content delivery device(s) 508 may be integrated, for example.

The system 500 may be implemented as a wireless system or a wired system. When implemented as a wireless system, the system 500 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum. When implemented as a wired system, the system 500 may include components and interfaces suitable for communicating over wired communications media, such as input/output (I/O) adapters, physical connectors to connect the I/O adapter with a corresponding wired communications medium, a network interface card (NIC), disc controller, video controller, audio controller, or the like. Examples of wired communications media may include a wire, cable, metal leads, printed circuit board (PCB), backplane, switch fabric, semiconductor material, twisted-pair wire, co-axial cable, fiber optics, or the like.

The platform 502 may establish one or more logical or physical channels to communicate information. The information may include media information and control information. Media information may refer to any data representing content meant for a user. Examples of content may include, for example, data from a voice conversation, videoconference, streaming video, electronic mail (email) message, voice mail message, alphanumeric symbols, graphics, image, video, text, and the like. Data from a voice conversation may be, for example, speech information, silence periods, background noise, comfort noise, tones, and the like. Control information may refer to any data representing commands, instructions or control words meant for an automated system. For example, control information may be used to route media information through a system, or instruct a node to process the media information in a predetermined manner. The embodiments, however, are not limited to the elements or the context shown or described in Figure 5.

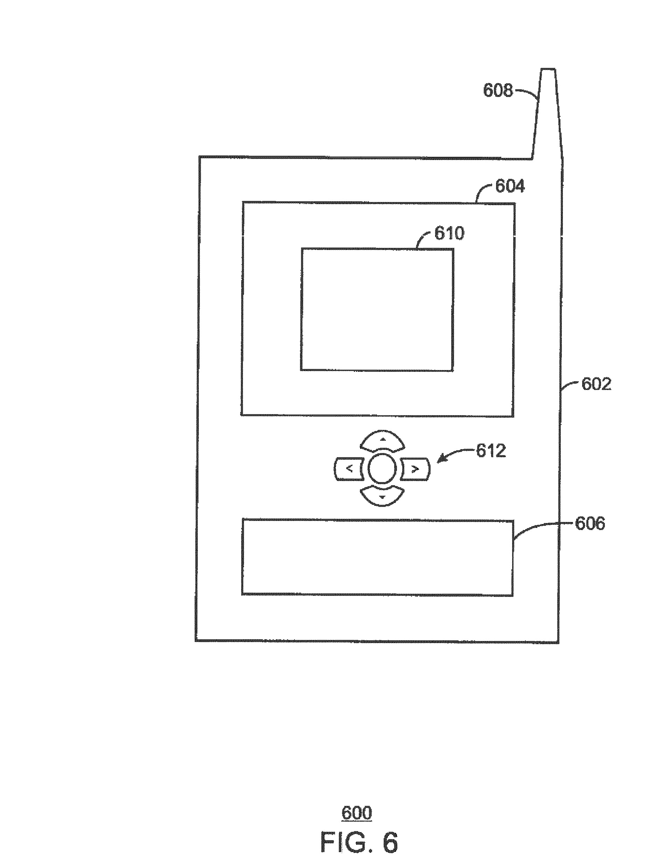

Fig. 6 is a schematic of a small form factor device 600 in which the system 500 of Fig. 5 may be embodied. Like numbered items are as described with respect to Fig. 5. In some embodiments, for example, the device 600 is implemented as a mobile computing device having wireless capabilities. A mobile computing device may refer to any device having a processing system and a mobile power source or supply, such as one or more batteries, for example.

As described above, examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and the like.

An example of a mobile computing device may also include a computer that is arranged to be worn by a person, such as a wrist computer, finger computer, ring computer, eyeglass computer, belt-clip computer, arm-band computer, shoe computer, clothing computer, or any other suitable type of wearable computer. For example, the mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well.

As shown in Fig. 6, the device 600 may include a housing 602, a display 604, an input/output (I/O) device 606, and an antenna 608. The device 600 may also include navigation features 610. The display 604 may include any suitable display unit for displaying information appropriate for a mobile computing device. The I/O device 606 may include any suitable I/O device for entering information into a mobile computing device. For example, the I/O device 606 may include an alphanumeric keyboard, a numeric keypad, a touch pad, input keys, buttons, switches, rocker switches, microphones, speakers, a voice recognition device and software, or the like. Information may also be entered into the device 600 by way of microphone. Such information may be digitized by a voice recognition device.

### EXAMPLE 1

A method for transcoding video data is described herein. The method includes decoding a video stream to obtain decoded frames. A decode parameter may be extracted from the video stream. Additionally, the frames may be encoded using the decode parameter. In embodiments, the decode parameter may be a decode streamout, and the decode streamout may include at least one of one or more motion vectors, one or more quantization parameters, or one or more macroblock types. Encoding the frames using the decode parameter can include modifying one or more motion vectors, modifying one or more quantization parameters, or modifying one or more macroblock types obtained from the decode parameter and encoding the frames using at least one of the modified motion vector, quantization parameter, or macroblock type. Further, the method includes using the decode parameter to determine a starting point for a new motion estimation search.

The method may also include decoding an H.264 advanced video coding (AVC) video stream. Bit rate control may be performed on each frame of the video stream, and the video stream may be repackaged. Extracting the decode parameter from the video stream may include scaling a motion vector of the decode parameter. The method also includes encoding the frames using the decode parameter by at least one of modifying one or more motion vectors, modifying one or more quantization parameters, or modifying one or more macroblock types obtained from the decode parameters to be complaint with a new profile or a new level of a target video compression format. Encoding the frames may also include using the decode parameter to change a profile of the video stream or changing a level of the decode parameter. Additionally, encoding the frames using the decode parameter may include changing a frame type of a group of pictures. The method also includes encoding the frames using the decode parameter by modifying the decode parameter to be compliant with a target video compression format.

### EXAMPLE 2

A computing device is described herein. The computing device includes a decoder that is configured to decode a video stream to obtain decoded frames. The computing device may also include a central processing unit (CPU) that is configured to execute stored instructions and a storage device that stores instructions. The CPU may be configured to extract a decode parameter from the video stream. An encoder may be configured to encode the frames based on the decode parameter.

The decode parameter may be a decode streamout comprising at least one or more motion vectors, one or more quantization parameters, or one or more macroblock types. The encoder may modify at least one of one or more motion vectors, one or more quantization parameters, or one or more macroblock types from the decode parameter and encode the frames using at least one of the modified motion vector, quantization parameter, or macroblock type. Further, the decode parameter may be used to determine a starting point for a new motion estimation search.

The decoder may also decode an H.264 advanced video coding (AVC) video stream. Bit rate control may be performed on each frame of the video stream, and the video stream may be repackaged. A motion vector of the decode parameter may be scaled when the decode parameter is extracted. The encoder may also change a profile of the video stream or change a level of the decode parameter. The encoder may also change a frame type of a group of pictures. The encoder also modifies the decode parameter to be compliant with a target video compression format. The computing device may also include a radio and a display, the radio and display communicatively coupled at least to the central processing unit.

### EXAMPLE 3

At least one non-transitory machine readable medium having instructions stored therein is described herein. In response to being executed on a computing device, the instructions cause the computing device to decode a video stream to obtain decoded frames. A decode parameter may be extracted from the video stream. The frames may be encoded using the decode parameter.

The decode parameter may be a decode streamout including at least one of one or more motion vectors, one or more quantization parameters, or one or more macroblock types. Encoding the frames using the decode parameter includes at least one of modifying one or more motion vectors, modifying one or more quantization parameters, or modifying one or more macroblock types obtained from the decode parameter and encoding the frames using at least one of the modified motion vectors, quantization parameters, and macroblock types. Additionally, the decode parameter may be used to determine a starting point for a new motion estimation search.

It is to be understood that specifics in the aforementioned examples may be used anywhere in one or more embodiments. For instance, all optional features of the computing device described above may also be implemented with respect to either of the methods or the computer-readable medium described herein. Furthermore, although flow diagrams and/or state diagrams may have been used herein to describe embodiments, the inventions are not limited to those diagrams or to corresponding descriptions herein. For example, flow need not move through each illustrated box or state or in exactly the same order as illustrated and described herein

The inventions are not restricted to the particular details listed herein. Indeed, those skilled in the art having the benefit of this disclosure will appreciate that many other variations from the foregoing description and drawings may be made within the scope of the present inventions. Accordingly, it is the following claims including any amendments thereto that define the scope of the inventions.

## Claims

1. A method for transcoding video data, comprising:
decoding a video stream to obtain decoded frames;
extracting a decode parameter from the video stream; and
encoding the frames using the decode parameter.

2. The method of claim 1, wherein the decode parameter is a decode streamout comprising at least one of one or more motion vectors, one or more quantization parameters, or one or more macroblock types.

3. The method of claim 1 or 2, wherein encoding the frames using the decode parameter includes at least one of modifying one or more motion vectors, modifying one or more quantization parameters, or modifying one or more macroblock types obtained from the decode parameter and encoding the frames using at least one of the modified motion vector, quantization parameter, or macroblock type.

4. The method of one of claims 1 to 3, comprising using the decode parameter to determine a starting point for a new motion estimation search.

5. The method of one of claims 1 to 4, wherein the video stream comprises an H.264 advanced video coding (AVC) video stream, and wherein the method further comprises:
decoding the H.264 advanced video coding (AVC) video stream;
performing bit rate control on each frame of the video stream; and
repackaging the video stream.

6. The method of one of claims 1 to 5, wherein extracting the decode parameter from the video stream includes scaling a motion vector of the decode parameter.

7. The method of one of claims 1 to 6, wherein encoding the frames using the decode parameter includes at least one of modifying one or more motion vectors, modifying one or more quantization parameters, or modifying one or more macroblock types obtained from the decode parameters to be complaint with a new profile or a new level of a target video compression format.

8. The method of one of claims 1 to 7, wherein encoding the frames using the decode parameter includes changing a frame type of a group of pictures and/or modifying the decode parameter to be compliant with a target video compression format.

9. A computing device comprising a decoder that is configured to decode a video stream to obtain decoded frames, a central processing unit (CPU) that is configured to execute stored instructions and a storage device that stores instructions, wherein the storage device includes processor executable code that, when executed by the CPU, is configured to:
extract a decode parameter from the video stream; and
an encoder that is configured to encode the frames based on the decode parameter.

10. The computing device of claim 9, wherein the decode parameter is a decode streamout comprising at least one or more motion vectors, one or more quantization parameters, or one or more macroblock types and/or wherein the encoder modifies at least one of one or more motion vectors, one or more quantization parameters, or one or more macroblock types of the decode parameter and encodes the frames using at least one of the modified motion vector, quantization parameter, or macroblock type.

11. The computing device of one of claims 9 to 10, wherein a motion estimation uses the decode parameter to determine a starting point for a new motion estimation search.

12. The computing device of one of claims 9 to 11, wherein the video stream comprises an H.264 advanced video coding (AVC) video stream, and wherein the decoder decodes the H.264 advanced video coding (AVC) video stream, bit rate control is performed on each frame of the video stream, and the video stream is repackaged.

13. The computing device of one of claims 9 to 12, wherein the processor executable code configures the CPU to extract a decode parameter and scale a motion vector of the decode parameter.

14. The computing device of one of claims 9 to 13, wherein the encoder changes a profile of the video stream or changes a level of the decode parameter and/or the encoder changes a frame type of a group of pictures and/or wherein the encoder modifies the decode parameter to be compliant with a target video compression format.

15. At least one machine readable medium having instructions stored therein that, in response to being executed on a computing device, cause the computing device to perform the steps of a method of one of claims 1 to 8.
